# EUROPEAN PATENT APPLICATION

(11) **EP 4 772 736 A1**
(43) Date of publication of application: **08.07.2026**
(21) Application number: 23950716.3
(22) Date of filing: 30.08.2023
(51) Int. Cl.: F02M 26/52, F02M 26/06

(54) **CONTROL METHOD AND DEVICE FOR EXHAUST RECIRCULATION DEVICE**

(71) Applicant: Nissan Motor Co., Ltd., Yokohama-shi, Kanagawa 221-0023 (JP)
(72) Inventor: YANAKA, Tomohiro, Atsugi-shi, Kanagawa 243-0123 (JP); AMANO, Shinichirou, Atsugi-shi, Kanagawa 243-0123 (JP)
(74) Representative: Hoefer & Partner Patentanwälte mbB
(86) International application number: PCT/JP2023/031387
(87) International publication number: WO 2025/046767

(57) **Abstract**

This control device for an exhaust gas recirculation device provided with an EGR valve for controlling an exhaust gas recirculation amount includes: a target EGR rate setting unit (51); a target EGR valve passing flow rate calculation unit (52); an EGR valve upstream-side pressure estimation unit (53); an EGR valve downstream-side pressure estimation unit (54); an EGR valve gas temperature estimation unit (55); a basic target EGR valve opening area calculation unit (56); a differential pressure sensor (25); an actual EGR valve opening area calculation unit (57); an opening area ratio calculation unit (58); to limit (59); a steady state determination unit (60); a final target EGR valve opening area calculation unit (61); and an EGR valve control unit (62). An actual EGR valve opening area based on the front-rear differential pressure (ΔP) detected by the differential pressure sensor (25) is used to correct the basic target EGR valve opening area based on the estimated value.

## Description

### Technical Field

The present invention relates to control of an exhaust gas recirculation system that recirculates a portion of exhaust gas from an exhaust section of an internal combustion engine to an intake section of the internal combustion engine.

### Background Art

In an exhaust gas recirculation system that recirculates a portion of exhaust gas from an exhaust section of an internal combustion engine to an intake section of the internal combustion engine, in order to achieve a high exhaust gas recirculation rate close to a limit of combustion and thereby improve fuel efficiency, it is required to control with high accuracy a flow rate of exhaust gas that actually flows into combustion chambers. A quantity of recirculating exhaust gas, namely, a flow rate of the exhaust gas, is adjusted in accordance with a degree of opening of an exhaust gas recirculation control valve (EGR valve) arranged in an exhaust gas recirculation passage. When the EGR valve is regarded as a kind of orifice, the flow rate of the EGR valve is determined by an opening area of the EGR valve, a differential pressure across the EGR valve, and a temperature of exhaust gas.

A patent document 1 discloses an exhaust gas recirculation system for a diesel engine equipped with a turbocharger, wherein a differential pressure sensor is provided for sensing a differential pressure across an EGR valve. In the system of patent document 1, a boost pressure in an intake manifold is sensed by a boost pressure sensor, and the degree of opening of the EGR valve is set based on the sensed boost pressure and the differential pressure using a map that is defined by the boost pressure and the differential pressure as parameters.

However, when the degree of opening of the EGR valve is controlled using the differential pressure across the EGR valve measured by the differential pressure sensor as a main parameter, pulsating components in exhaust gas and intake air have a large effect, making the degree of opening of the EGR valve unstable and thereby making the control of the quantity of recirculating exhaust gas unstable.

### Prior Art Document(s)

### Patent Document(s)

Patent Document 1: Japanese Patent Application Publication No. 2004-278421

### Summary of Invention

According to the present invention, a control method for an exhaust gas recirculation system, wherein the exhaust gas recirculation system includes: an exhaust gas recirculation passage structured to recirculate a portion of exhaust gas from an exhaust section of an internal combustion engine to an intake section of the internal combustion engine; and an EGR valve structured to regulate a flow rate of recirculating exhaust gas, the control method includes: determining a basic target EGR valve opening area based on a required exhaust gas recirculation rate; measuring a differential pressure across the EGR valve; calculating an actual EGR valve opening area based on a measured value of the differential pressure and a value of the flow rate of recirculating exhaust gas corresponding in time to the measured value; determining an opening area ratio that is a ratio between the actual EGR valve opening area and the basic target EGR valve opening area; determining a final target EGR valve opening area by correcting the basic target EGR valve opening area by the opening area ratio; and controlling a degree of opening of the EGR valve in accordance with the final target EGR valve opening area.

In other words, basically, the basic target EGR valve opening area is calculated based on the required exhaust gas recirculation rate in a so-called feedforward manner without depending on an actual measured value of the across-valve differential pressure.

On the other hand, in parallel with the calculation of this basic target EGR valve opening area, the differential pressure across the EGR valve is measured, and the actual EGR valve opening area is calculated based on the measured across-valve differential pressure. The actual EGR valve opening area corresponds to an opening area of the EGR valve required to obtain the quantity of recirculating exhaust gas at the moment under the measured across-valve differential pressure. The basic target EGR valve opening area is corrected using the opening area ratio between the actual EGR valve opening area and the basic target EGR valve opening area, thereby calculating the final target EGR valve opening area.

In other words, the basic target EGR valve opening area is feedback-corrected based on the actually measured across-valve differential pressure, thereby improving the accuracy of control of the quantity of recirculating exhaust gas. Furthermore, since the basic target EGR valve opening area is calculated basically in a feedforward manner, stable control is possible without being affected by the pulsating components in exhaust gas and intake air.

### Brief Description of Drawings

FIG. 1 is a diagram illustrating configuration of an exhaust gas recirculation system according to an embodiment of the present invention.
FIG. 2 is a functional block diagram showing an EGR valve control system according to the present embodiment.
FIG. 3 is a flowchart showing a flow of process according to the present embodiment.

### Mode(s) for Carrying Out Invention

The following describes an embodiment of the present invention in detail with reference to the drawings.

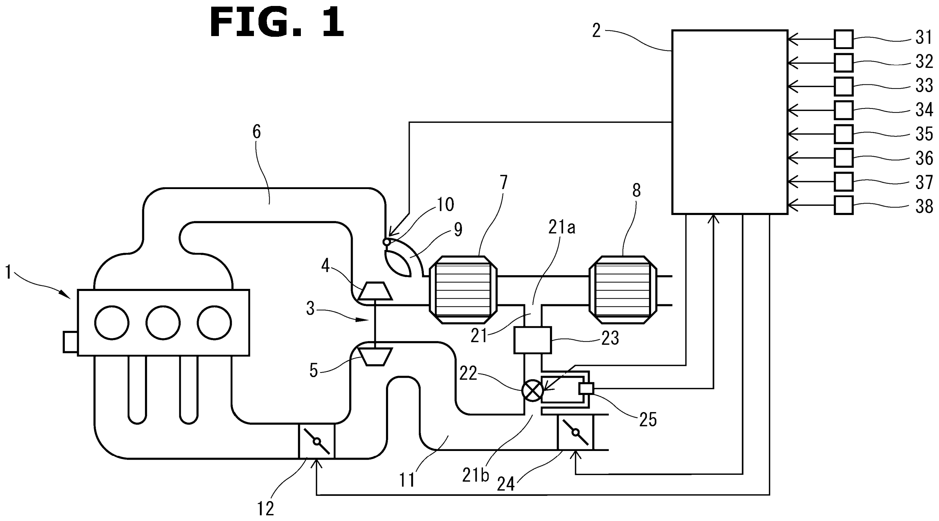

FIG. 1 shows an exhaust gas recirculation system for an internal combustion engine 1 equipped with a turbocharger 3 according to the present embodiment of the present invention. In this example, the internal combustion engine 1 is a four-stroke cycle spark ignition gasoline engine. The internal combustion engine 1 includes an exhaust passage 6 where an exhaust turbine 4 of the turbocharger 3 is arranged. Downstream of the exhaust turbine 4, an upstream catalytic converter 7 and a downstream catalytic converter 8 are arranged, wherein each catalytic converter employs a three-way catalyst in this example. In a further downstream section of the exhaust passage 6, an exhaust muffler not shown is arranged such that the exhaust passage 6 is opened to the outside via the exhaust muffler. The exhaust turbine 4 is provided with a known bypass passage 9 and a known wastegate valve 10 for controlling the boost pressure.

The turbocharger 3 includes a compressor 5 disposed in an intake passage 11 of the internal combustion engine 1. Downstream of the compressor 5, an electronically controlled throttle valve 12 is disposed for regulating a quantity of intake air. Between the compressor 5 and the throttle valve 12, an intercooler not shown may be provided for cooling supercharged intake air.

Between the exhaust passage 6 and the intake passage 11, an exhaust gas recirculation passage 21 is provided for recirculating a portion of exhaust gas to the intake section. The exhaust gas recirculation passage 21 has a base end 21a branching off from a section of the exhaust passage 6 downstream of the exhaust turbine 4, more specifically, between the upstream catalytic converter 7 and the downstream catalytic converter 8. The exhaust gas recirculation passage 21 has a tip end 21b connected to a section of the intake passage 11 upstream of the compressor 5.

Namely, the illustrated exhaust gas recirculation system is a so-called low-pressure exhaust gas recirculation system in which exhaust gas, which has passed through the exhaust turbine 4 and has been reduced in pressure, is recirculated to the intake section.

In the exhaust gas recirculation passage 21, an EGR valve (exhaust gas recirculation control valve) 22 is disposed and has a degree of opening that is variably controlled by an engine controller 2. The EGR valve 22 may be of any type capable of controlling the flow rate of exhaust gas. In this embodiment, the EGR valve 22 is implemented by a so-called duty control solenoid valve for adjusting the flow rate, wherein the on-duty of a drive pulse signal is variably controlled (i.e., PWM control). Furthermore, an EGR gas cooler 23 is provided at a position closer to the exhaust passage 6 than the EGR valve 22 (namely, upstream in terms of flow of exhaust gas) for cooling the recirculated exhaust gas.

In this preferred embodiment, a negative pressure generating valve 24 is disposed upstream of a point of connection between the intake passage 11 and the exhaust gas recirculation passage 21. The negative pressure generating valve 24 has an adjustable degree of opening for generating a pressure difference required for exhaust gas recirculation. The degree of opening of this negative pressure generating valve 24 is controlled by the engine controller 2 in accordance with operating conditions of the internal combustion engine 1 (in other words, a target exhaust gas recirculation rate (EGR rate)). However, the negative pressure generating valve 24 is not a critical part of the present invention, and detailed description thereof is omitted.

The exhaust gas recirculation passage 21 is provided with a differential pressure sensor 25 for sensing a differential pressure ΔP across the EGR valve 22. In this example, the differential pressure sensor 25 is of a type that senses a pressure difference between two pressure chambers, wherein pressure upstream of the EGR valve 22 (on the EGR gas cooler 23 side) is introduced into one of the pressure chambers, and pressure downstream of the EGR valve 22 (on the intake passage 11 side) is introduced into the other pressure chamber. The differential pressure sensor 25 may be of a type that measures the pressures of the two pressure chambers individually and outputs the pressure difference therebetween. Alternatively, instead of the differential pressure sensor 25, two pressure sensors may be employed to measure the upstream pressure and the downstream pressure, respectively, and the across-valve differential pressure ΔP may be calculated from sensed pressure values of the respective pressures.

The engine controller 2 receives input of a sensing signal from the differential pressure sensor 25, and also sensing signals from various sensors, wherein the sensors include: an air flow meter 31 for sensing the intake air quantity; an air-fuel ratio sensor 32 for sensing the exhaust air-fuel ratio; a crank angle sensor 33 for sensing the engine speed; a water temperature sensor 34 for sensing the coolant temperature; a boost pressure sensor 35 for sensing the boost pressure; an accelerator opening sensor 36 for sensing an amount of depression of an accelerator pedal; an atmospheric pressure sensor 37 for sensing the atmospheric pressure; and an outside air temperature sensor 38 for sensing the outside air temperature. Based on these sensing signals and requests from other on-vehicle controllers, the engine controller 2 optimally controls the fuel injection quantity, the fuel injection timing, the ignition timing, the degree of opening of the throttle valve 12, the boost pressure, the EGR rate, etc.

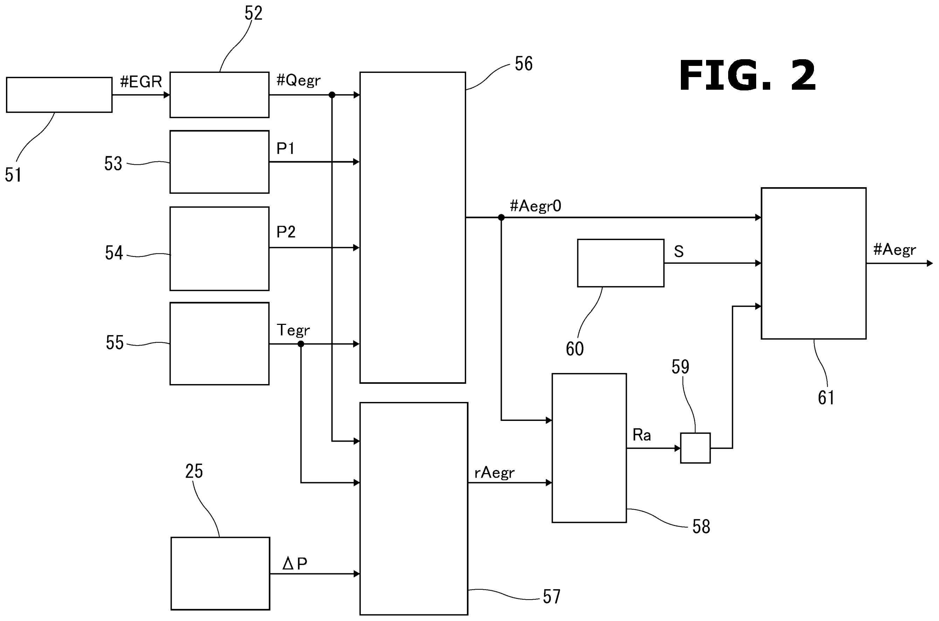

The following describes FIG. 2 that is a functional block diagram showing an EGR valve control system according to the present embodiment. Each functional block shown in FIG. 2 is implemented as a function of the engine controller 2.

As shown in FIG. 2, according to the present embodiment, the EGR valve control system includes a target EGR rate setting section 51, a target EGR valve passing flow rate calculation section 52, an EGR valve upstream pressure estimation section 53, an EGR valve downstream pressure estimation section 54, an EGR valve gas temperature estimation section 55, a basic target EGR valve opening area calculation section 56, an actual EGR valve opening area calculation section 57, an opening area ratio calculation section 58, a limiter 59, a steady state determination section 60, a final target EGR valve opening area calculation section 61, and an EGR valve control section 62.

The target EGR rate setting section 51 sets a target EGR rate #EGR based on operating conditions (mainly the load and rotation speed) of the internal combustion engine 1, for example, with reference to a map. The target EGR valve passage flow rate calculation section 52 calculates a target EGR valve passage flow rate (mass flow rate of exhaust gas passing through the EGR valve 22) #Qegr required to achieve the target EGR rate #EGR.

The EGR valve upstream pressure estimating section 53 estimates the pressure upstream (on the inlet side) of the EGR valve 22 by estimating the exhaust pressure and integrating a loss in pressure of each section, and outputs an estimated EGR valve upstream pressure P1. Similarly, the EGR valve downstream pressure estimation section 54 estimates the pressure downstream (on the outlet side) of the EGR valve 22 by integrating a loss in pressure of each section with respect to the atmospheric pressure, and outputs an estimated EGR valve downstream pressure P2. The differential pressure across the EGR valve 22 is estimated based on the estimated EGR valve upstream pressure P1 and the estimated EGR valve downstream pressure P2.

The EGR valve gas temperature estimation section 55 estimates the temperature of exhaust gas passing through the EGR valve 22 by evaluating the exhaust temperature, heat exchange in the EGR gas cooler 23, temperature drop in the pipe, etc., in accordance with operating conditions, and outputs an estimated EGR valve gas temperature Tegr.

The basic target EGR valve opening area calculation section 56 treats the EGR valve 22 as a type of orifice and calculates an opening area of the EGR valve 22 required to obtain the target EGR valve passing flow rate #Qegr, based on the target EGR valve passing flow rate #Qegr, the estimated EGR valve upstream pressure P1, the estimated EGR valve downstream pressure P2, and the estimated EGR valve gas temperature Tegr, and outputs the calculated opening area as the basic target EGR valve opening area #Aegr0.

The actual EGR valve opening area calculation section 57 receives input of the across-valve differential pressure ΔP outputted by the differential pressure sensor 25, the target EGR valve passing flow rate #Qegr, and the estimated EGR valve gas temperature Tegr, and based on these inputs, calculates an opening area of the EGR valve 22 required to obtain the target EGR valve passing flow rate #Qegr, treating the EGR valve 22 as a type of orifice. The calculated opening area is then outputted as an actual EGR valve opening area rAegr. Since the signal outputted by the differential pressure sensor 25 vibrates relatively significantly due to pulsating components in exhaust gas and intake air, this signal is processed by suitable filtering and then inputted to the actual EGR valve opening area calculation section 57 as the across-valve differential pressure ΔP.

The actual EGR valve opening area calculation section 57 basically performs calculations similar to those of the basic target EGR valve opening area calculation section 56. However, the actual EGR valve opening area calculation section 57 determines the EGR valve opening area based on the across-valve differential pressure ΔP actually measured by the differential pressure sensor 25, instead of the estimated EGR valve upstream pressure P1 and the estimated EGR valve downstream pressure P2 inputted to the basic target EGR valve opening area calculation section 56. Therefore, the actual EGR valve opening area rAegr can be regarded as an EGR valve opening area required to achieve the target EGR valve passing flow rate #Qegr under the actually measured across-valve differential pressure ΔP.

The opening area ratio calculation section 58 calculates an opening area ratio Ra that is a ratio between the actual EGR valve opening area rAegr calculated by the actual EGR valve opening area calculation section 57 and the basic target EGR valve opening area #Aegr0 calculated by the basic target EGR valve opening area calculation section 56. In the present embodiment, the opening area ratio calculation section 58 outputs a ratio of the actual EGR valve opening area rAegr when the basic target EGR valve opening area #Aegr0 is set to 1, as the opening area ratio Ra to the final target EGR valve opening area calculation section 61. Namely, in the present embodiment, Ra = rAegr/#Aegr0. Here, the limiter 59 is provided for the output of the opening area ratio calculation section 58, and limits the opening area ratio Ra within a range between predetermined upper and lower limits. For example, the opening area ratio Ra is limited within a range of about several percent with respect to a central value of 1.

The steady state determination section 60 determines whether or not the internal combustion engine 1 is in a steady state. In this example, when the rate of change of the load and the rotation speed is small, it is determined that the state is steady, and a steady state determination signal S is outputted. In this preferred embodiment, the basic target EGR valve opening area #Aegr0 is corrected only when the engine is in a steady state.

The final target EGR valve opening area calculation section 61 corrects the basic target EGR valve opening area #Aegr0 using the opening area ratio Ra, which is outputted by the opening area ratio calculation section 58 and limited by the limiter 59, and outputs a corrected value as the final target EGR valve opening area #Aegr to the EGR valve control section 62. This correction is performed on the condition that the steady state determining section 60 determines that the state is steady. When the state is not steady, the basic target EGR valve opening area #Aegr0 is outputted without any correction, as the final target EGR valve opening area #Aegr to the EGR valve control section 62. In the present embodiment, the final target EGR valve opening area #Aegr is calculated by multiplying the basic target EGR valve opening area #Aegr0 by the opening area ratio Ra.

The final target EGR valve opening area #Aegr calculated in this manner is a quantity literally corresponding to the area of the orifice. Accordingly, the EGR valve control section 62 converts the final target EGR valve opening area #Aegr into a degree of opening of the EGR valve 22, and further converts the degree of opening of the EGR valve 22 into an on-duty for PWM control of the EGR valve 22.

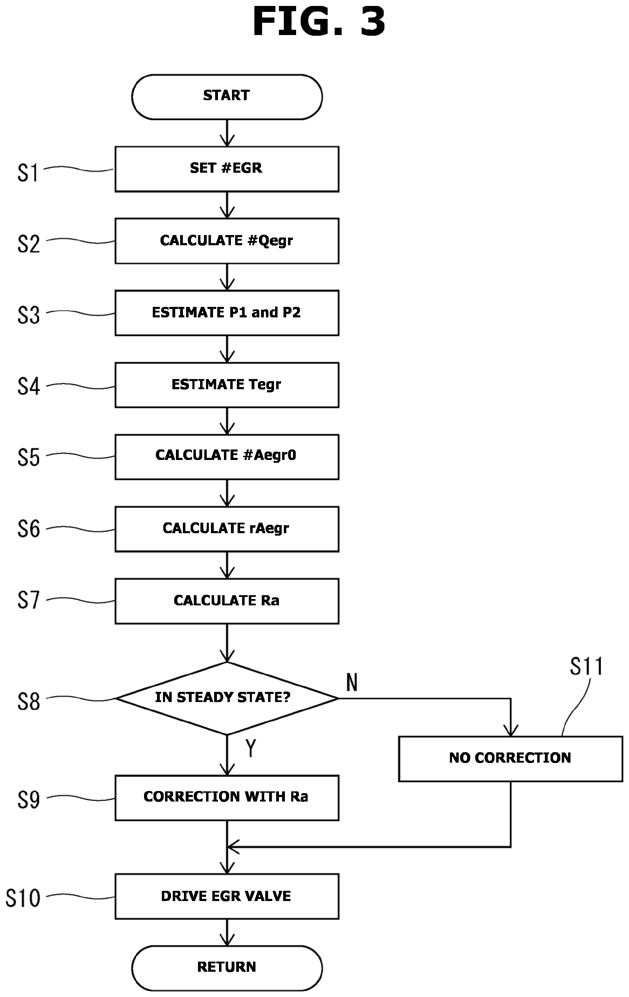

FIG. 3 is a flowchart showing a flow of process of the EGR valve control. The process shown in this flowchart is repeatedly executed by the engine controller 2.

First, at Step 1, the target EGR rate #EGR is set based on the operating conditions of the internal combustion engine 1 at the moment. At Step 2, the target EGR valve passing flow rate #Qegr required to achieve the target EGR rate #EGR is calculated.

Next, at Step 3, the estimated EGR valve upstream pressure P1 and the estimated EGR valve downstream pressure P2 are determined. At Step 4, the estimated EGR valve gas temperature Tegr is determined. These estimated pressures and temperature are successively determined by another routine not shown, to be read.

At Step 5, as described above, the basic target EGR valve opening area #Aegr0 is calculated using the target EGR valve passing flow rate #Qegr, the estimated EGR valve upstream pressure P1, the estimated EGR valve downstream pressure P2, and the estimated EGR valve gas temperature Tegr.

Substantially in parallel with the calculation of the basic target EGR valve opening area #Aegr0, the actual EGR valve opening area rAegr is calculated at Step 6 using the across-valve differential pressure ΔP measured by the differential pressure sensor 25.

Then, at Step 7, the opening area ratio Ra therebetween is calculated.

At Step 8, it is determined whether or not the internal combustion engine 1 is in a steady state. When the engine is in a steady state, the process proceeds to Step 9, where the basic target EGR valve opening area #Aegr0 is corrected using the opening area ratio Ra to obtain the final target EGR valve opening area #Aegr. Then, at Step 10, the EGR valve 22 is driven in accordance with the final target EGR valve opening area #Aegr after the correction.

On the other hand, when the engine is not in a steady state, the process proceeds from Step 8 to Step 11, where the basic target EGR valve opening area #Aegr0 is set as the final target EGR valve opening area #Aegr without any correction. Then, at Step 10, the EGR valve 22 is driven in accordance with this final target EGR valve opening area #Aegr.

As described above, in the above embodiment, the EGR valve opening area is basically controlled in a feedforward manner based on the estimated EGR valve upstream pressure P1, the estimated EGR valve downstream pressure P2, and the estimated EGR valve gas temperature Tegr. This serves to achieve a stable exhaust flow rate control without being affected by pulsating components in exhaust gas and intake air. When the internal combustion engine 1 is in a steady state, the actual EGR valve opening area rAegr obtained based on the across-valve differential pressure ΔP actually sensed by the differential pressure sensor 25 is used as a kind of feedback signal to correct the basic target EGR valve opening area #Aegr0. This serves to correct variations in the feedforward control system and thereby improve the accuracy of control of the exhaust flow rate. This makes it possible to increase the target EGR rate close to the limit of combustion.

During non-steady or transient states, it is preferable not to perform the correction based on the actual EGR valve opening area rAegr, namely, the opening area ratio Ra, in view of delays in the control. In the above embodiment, the opening area ratio Ra, which is a kind of correction coefficient, is limited to a suitable range by the limiter 59. This serves to prevent overcorrection and instability of flow control due to disturbances or the like.

Although one embodiment of the present invention has been described above, the present invention is not limited to the above embodiment and various modifications are possible.

## Claims

1. A control method for an exhaust gas recirculation system, wherein the exhaust gas recirculation system includes: an exhaust gas recirculation passage structured to recirculate a portion of exhaust gas from an exhaust section of an internal combustion engine to an intake section of the internal combustion engine; and an EGR valve structured to regulate a flow rate of recirculating exhaust gas, the control method comprising:
determining a basic target EGR valve opening area based on a required exhaust gas recirculation rate;
measuring a differential pressure across the EGR valve;
calculating an actual EGR valve opening area based on a measured value of the differential pressure and a value of the flow rate of recirculating exhaust gas corresponding in time to the measured value;
determining an opening area ratio that is a ratio between the actual EGR valve opening area and the basic target EGR valve opening area;
determining a final target EGR valve opening area by correcting the basic target EGR valve opening area by the opening area ratio; and
controlling a degree of opening of the EGR valve in accordance with the final target EGR valve opening area.

2. The control method as claimed in claim 1, comprising:
estimating the differential pressure across the EGR valve; and
determining the basic target EGR valve opening area based on an estimated value of the differential pressure.

3. The control method as claimed in claim 1, comprising:
determining whether a state is steady or transient;
when determining that the state is steady, implementing the correction of the basic target EGR valve opening area by the opening area ratio; and
when determining that the state is transient, setting the final target EGR valve opening area to the basic target EGR valve opening area.

4. The control method as claimed in claim 1, comprising:
implementing the measurement of the differential pressure across the exhaust gas recirculation control valve by a differential pressure sensor.

5. The control method as claimed in claim 1, comprising:
determining a target flow rate through the EGR valve based on the required exhaust gas recirculation rate;
determining the basic target EGR valve opening area based on the target flow rate through the EGR valve; and
implementing the calculation of the actual EGR valve opening area by regarding the target flow rate through the EGR valve as the corresponding value of the flow rate of recirculating exhaust gas.

6. The control method as claimed in claim 1, comprising:
estimating temperature of gas passing through the EGR valve; and
correcting the basic target EGR valve opening area and the actual EGR valve opening area based on the temperature.

7. The control method as claimed in claim 1, wherein:
the internal combustion engine is a spark-ignition internal combustion engine equipped with a turbocharger; and
the exhaust gas recirculation system is a low-pressure exhaust gas recirculation system structured to recirculate exhaust gas from downstream of a turbine of the turbocharger to upstream of a compressor of the turbocharger.

8. A control device for an exhaust gas recirculation system, wherein the exhaust gas recirculation system includes: an exhaust gas recirculation passage structured to recirculate a portion of exhaust gas from an exhaust section of an internal combustion engine to an intake section of the internal combustion engine; and an EGR valve structured to regulate a flow rate of recirculating exhaust gas, the control device comprising:
a basic target EGR valve opening area calculation section configured to determine a basic target EGR valve opening area based on a required exhaust gas recirculation rate;
a differential pressure sensor structured to measure a differential pressure across the EGR valve;
an actual EGR valve opening area calculation section configured to calculate an actual EGR valve opening area based on a measured value of the differential pressure and a value of the flow rate of recirculating exhaust gas corresponding in time to the measured value;
a steady state determination section configured to determine whether a state is steady or transient; and
an EGR valve control section configured to:
when determining that the state is steady, controlling a degree of opening of the EGR valve based on the actual EGR valve opening area; and
when determining that the state is transient, controlling the degree of opening of the EGR valve based on the basic target EGR valve opening area.

9. The control device as claimed in claim 8, wherein the actual EGR valve opening area is limited such that a ratio of the actual EGR valve opening area to the basic target EGR valve opening area falls within a predetermined range having a central value of 1.

10. The control method as claimed in claim 8, comprising:
an opening area ratio calculation section configured to determine an opening area ratio that is a ratio between the actual EGR valve opening area and the basic target EGR valve opening area;
a limiter configured to limit the opening area ratio between predetermined upper and lower limits; and
a final target EGR valve opening area calculation section configured to determine a final target EGR valve opening area by correcting the basic target EGR valve opening area by the opening area ratio limited by the limiter;
wherein the EGR valve control section is configured to, when determining that the state is steady, control the degree of opening of the EGR valve by regarding the final target EGR valve opening area as the actual EGR valve opening area.
